# EUROPEAN PATENT SPECIFICATION

(11) **EP 3 851 894 B1**
(45) Date of publication and mention of the grant of the patent: **12.06.2024**
(21) Application number: 20152589.6
(22) Date of filing: 20.01.2020
(51) Int. Cl.: G02B 7/38, G02B 21/24, G02B 21/36

(54) **SYSTEM AND METHOD FOR DIGITAL MICROSCOPY IMAGING**
SYSTEM UND VERFAHREN FÜR DIGITALE MIKROSKOPISCHE BILDGEBUNG
SYSTÈME ET PROCÉDÉ D'IMAGERIE DE MICROSCOPIE NUMÉRIQUE

(43) Date of publication of application: 21.07.2021
(73) Proprietor: CellaVision AB, 223 62 Lund (SE)
(72) Inventor: Almers, Martin, 226 51 LUND (SE); Hedlund, Sven, 247 72 GENARP (SE)
(74) Representative: AWA Sweden AB

(56) References cited:
- JP-B2- 5 792 401
- US-A1- 2007 069 106
- US-A1- 2010 104 203
- US-A1- 2013 271 594
- US-A1- 2019 129 160
- US-A1- 2019 179 110
- US-A1- 2019 391 012

## Description

### Field of invention

The invention relates to a system and method for digital microscopy imaging.

### Technical Background

Microscopes have a shallow depth of field, especially when examining objects with high magnification. Thus, for thicker objects, this means that the entire object cannot be in focus at the same time. As a result, the focus has to be adjusted in order to look at one focused part, a so-called focus layer, at a time. In digital microscopy it is sometimes preferable to look at a plurality of focus layers of an object, and in order to do this, the microscope captures images at multiple focus layers throughout the object. These images, each captured at different foci, make up a z-stack in the camera. The z-stack data can then be communicated to external units such as a computer for analysis. The amount of data that needs to be sent to the external unit thus relates to the number of focus layers. Since not all images contain useful or interesting information, this results in vast amounts of unnecessary data being sent to the external unit, which requires high bandwidth and more expensive components. There is thus a need for improvements within this context.

US 2019 129160 A1 discloses a microscopy system wherein image processing is carried out in a processor of the camera.

### Summary of invention

In view of the above, it is thus an object of the present invention to overcome or at least mitigate the problems discussed above. In particular, it is an object of the invention to provide an improved and more efficient way of examining samples with a digital microscope and selecting what image data to send to an external computing unit.

A first aspect of the invention is defined in claim 1.

An advantage of this method is that the focus values are determined directly in the camera before the images are sent to a separate computing unit. By doing this, it can be ensured that only relevant images e.g. with good enough quality, i.e. focus value, are sent to the computing unit. Thus, less bandwidth between the camera and the computing unit is required, which allows for a sped up over all analysis process for the sample, as well as a cheaper hardware due to reduced bandwidth requirements.

According to the first aspect, the step of comparing the focus value of the captured image with at least one threshold focus value comprises comparing the focus value with a first threshold focus value. Advantageously, a low complexity process of determining whether the captured image is relevant or not is achieved.

According to some embodiments of the first part of the first aspect, the method further comprises the step of calculating a focus value curve for the plurality of images, and determining a focal distance corresponding to a peak focus value of the focus value curve, wherein the step of comparing the focus value of the captured image with at least one threshold focus value comprises: for an image captured at a focal distance less than the focal distance corresponding to the peak focus value, comparing the focus value with a first threshold focus value, and for an image captured at a focal distance larger than the focal distance corresponding to the peak focus value, comparing the focus value with a second threshold focus value, the second threshold focus value being different from the first threshold focus value.

An advantage of calculating a focus value curve is that the focus value is a relative measure and cannot be determined by evaluating one isolated image. The focus value curve can then be analyzed in order to select only those images having good enough quality, i.e. focus value. By for example determining a peak focus value of the focus value curve, the focus value of captured images and/or thresholds can be assessed in relation to this peak value. By having a first and second threshold being different from each other and assessing these in relation to e.g. the peak value of the focus value curve, the number of images being marked as interesting can be lowered while still ensuring that all images with interesting information are marked. This can be achieved in thicker or non-uniform samples by having a first threshold that is lower or higher than a second threshold. The first and second threshold can be set based on what type of sample is being analyzed, which thereby increases the flexibility of the inventive concept described herein. For example, the first threshold may be set as a defined percentage of the peak focus value, and the second threshold may be set as defined percentage of the first threshold or the peak focus value.

According to the first part of the first aspect, the steps of comparing the focus value of the captured image with at least one threshold focus value and marking the captured image as an interesting image, is performed in the camera. An advantage of performing the comparing step in the camera is that less data needs to be transferred to an external unit such as a computer. Moreover, the efficiency is increased since the determination of a captured image as being interesting image or not is performed in the camera, thus removing one step of information exchange with an external unit. Thus, less bandwidth is required, and the method gets more efficient.

According to some embodiments of the first part of the first aspect, the method further comprises the step of transmitting, from the camera, each determined focus value to the separate computing unit, wherein the steps of comparing the focus value of the captured image with at least one threshold focus value and marking the captured image as an interesting image is performed at the separate computing unit. The method also further comprises the step of receiving, at the camera, an indication from the separate computing unit of the marked images. An advantage of performing the comparing step in the computer instead of in the camera is that the camera requires less processing power. Moreover, the separate computing unit may use more advanced statistical data and calculations for determining the threshold focus value, without necessarily increasing the requirements of the processing power of the camera.

According to some embodiments of the first part of the first aspect, the step of capturing images is performed for each relevant focal distance in the sample, before the marking of images as interesting images is performed. An advantage of capturing images for each focal distance in the sample is that a more detailed focus value curve can be determined. Thus, the step of marking images as interesting will be more accurate.

According to some embodiments of the first part of the first aspect, the step of determining a focus value is performed after every captured image at each focal distance, before the next image is captured at the next focal distance, such that after a focus value has been determined to exceed the first threshold value, the step of capturing images is interrupted if the determined focus value for a captured image does not exceed the first and/or second threshold value.

An advantage of interrupting the step of capturing images if an image is determined to be of too low quality (i.e. not in focus) is that the analysis process can be sped up.

According to some embodiments of the first part of the first aspect, the first and/or second threshold focus value is calculated as a threshold percentage of the highest determined focus value for the captured images.

An advantage of determining a threshold focus value as a percentage of the highest determined focus value is that it provides for a straightforward way of filtering those images exceeding/not exceeding the percentage threshold. Another advantage of determining a threshold focus value as a percentage of the highest determined focus value is that the threshold is determined based on properties of the biological sample, and thus is individually adapted to each sample.

According to some embodiments of the first part of the first aspect, the threshold percentage for the first threshold is 50%.

According to some embodiments of the first part of the first aspect, the step of capturing images is performed for a plurality of x-y-positions in the sample. An advantage of capturing images for a plurality of x-y-positions is that information from the entire sample is gathered. Thus, the effect of saving bandwidth by only sending interesting images to the external unit becomes even greater, since sending all image information from every z-stack at every x-y-position in a sample would be less efficient and require more time, imply higher requirements on the bus hardware and be more expensive.

According to some embodiments of the first part of the first aspect, the first threshold and/or second threshold is based on focus value curves previously determined for other x-y-positions of the same sample. An advantage of basing thresholds on previously determined focus value curves of the same sample is that a new threshold or thresholds does not have to be determined for every x-y-position within the sample. This saves processing power. Another advantage is that by calculating the first threshold and/or second threshold based on multiple focus curves (e.g. taking the average), the accuracy of the threshold(s) become higher. Another advantage of basing a threshold on previous focus value curves is that the threshold can be set to an advantageous percentage of the peak value.

According to some embodiments of the first part of the first aspect, the focus value for each image is calculated by convolution with a filter in the x-direction and/or y-direction. An advantage of using convolution to filter the images is that it accentuates details of an image that are relevant for determining the focus value.

According to the first aspect, the camera comprises a programmable logic device, and the step of determining the focal value for the captured images is performed in the programmable logic device. An advantage of using a programmable logic device is that they are small, fast, cheap and requires low power.

According to some embodiments of the first part of the first aspect, the sample is a peripheral blood sample, cytology sample or a histopathology sample.

A second part of the first aspect is a system for digital microscopy imaging as defined in claim 13.

According to some embodiments of the second part of the first aspect, the processing unit is a programmable logic device.

According to some embodiments of the second part of the first aspect, the camera comprises a camera sensor for capturing a plurality of images of a plurality of x-y-positions in the sample. An advantage of capturing images for a plurality of x-y-positions is that information from the entire sample is gathered. Thus, the effect of saving bandwidth by only sending interesting images to the external unit becomes even greater, since sending all image information from every z-stack at every x-y-position in a sample would be less efficient and require more time, imply higher requirements on the bus hardware and be more expensive.

Preferred embodiments appear in the dependent claims and in the description.

The second part of the first aspect may generally have the same features and advantages as the first part of the first aspect. It is further noted that the invention relates to all possible combinations of features unless explicitly stated otherwise.

### Brief description of the drawings

The invention will by way of example be described in more detail with reference to the appended drawings, which show presently preferred embodiments of the invention. This invention may, however, be embodied in many different forms and should not be construed as limited to the embodiments set forth herein; rather, these embodiments are provided for thoroughness and completeness, and fully convey the scope of the invention to the skilled person. Additionally, variations to the disclosed embodiments can be understood and effected by the skilled person in practicing the claimed invention, from a study of the drawings, the disclosure, and the appended claims. It will be appreciated that the drawings are for illustration only and are not in any way restricting the scope of the invention.
Figure 1 discloses a schematic view of a method for digital microscopy imaging according to some embodiments of the invention.
Figure 2 discloses a schematic view of a method for digital microscopy imaging according to some embodiments of the invention.
Figure 3 discloses a schematic view of a method for digital microscopy imaging according to some embodiments of the invention Figure 4a discloses a first example of a focus curve.
Figure 4b discloses a second example of a focus curve.
Figure 4c discloses a third example of a focus curve.
Figure 5 discloses a schematic view of a digital microscopy imaging system according to the invention.

### Detailed description of preferred embodiments

It is contemplated that there are numerous modifications of the embodiments described herein, which are still within the scope of the invention as defined by the appended claims. The concept of the present invention is to provide an improved method and system for digital microscopy imaging.

The term relevant, with respect to 'each relevant focal distance in the sample', is to be understood as being dependent on the depth of field and content of the slide. Thus, the number of relevant focal distances is not a fixed number, but rather varies with the depth of field and content of the slide.

The z-direction, with respect to e.g. a z-stack, is to be understood as a direction in the vertical plane and representing a depth. The z-direction is perpendicular to both the x- and y-directions, which are perpendicular directions in the horizontal plane.

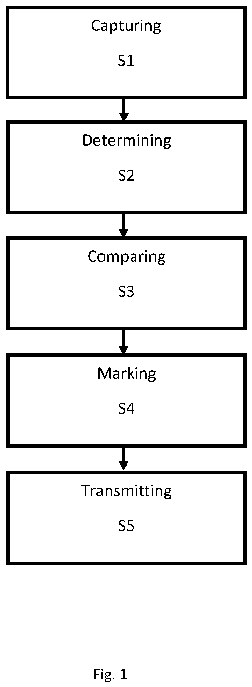

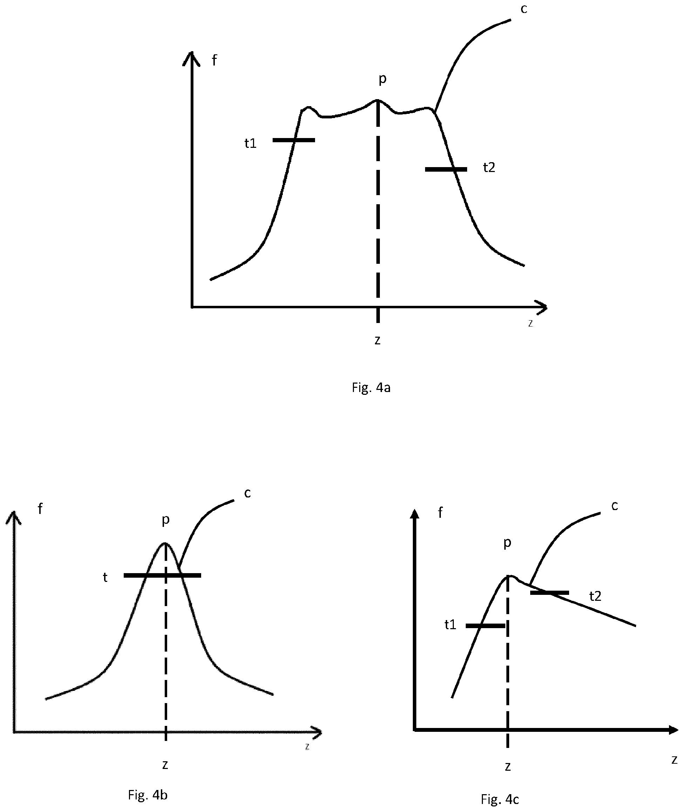

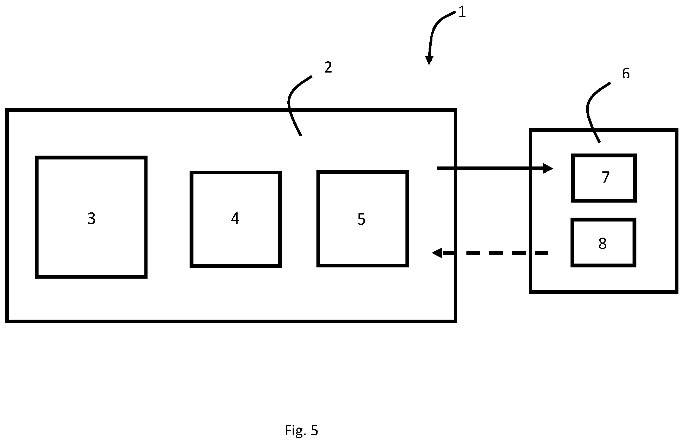

Figure 1 discloses a schematic view of a method for digital microscopy imaging according to the invention. As can be seen, the method comprises capturing S1 with a camera 2 (further described herein with reference to figure 5) a plurality of images of a position in a biological sample. The camera 2 comprises a processing unit 4, which is a programmable logic device. The biological sample could be a peripheral blood sample, cytology sample, histopathology sample, cervical sample, bone marrow, fecal sample, or any type of body fluid sample. Each of the images is captured at a different focal distance z (further described herein with reference to figures 4a-c). The camera 2 may capture a plurality of images at a plurality of x-y-positions in the sample. After capturing S1 the images, a focus value f (further described herein with reference to figures 4a-c) is determined S2 for each captured image. The focus value f describes how focused an image is. The focus value can for example be calculated by convoluting the image with a filter in the x- or y-direction. Any other suitable algorithm for determining a focus value of an image may be used, such as performing a contrast measurement on the image data of the image.

For every captured image, the focus value f is then compared S3 with at least one threshold focus value t (further describe herein with reference to figure 4). It is plausible that the images are compared S3 to a first threshold focus value t1, and/or a second threshold focus value t2 (further described herein with reference to figure 4a and 4c). If the focus value f of the captured image is determined to exceed the at least one threshold focus value t, the image is marked S4 as interesting. Finally, the images marked as interesting are transmitted S5 from the camera 2 to a separate computing unit 6. Only images marked as interesting are transmitted, which enables for lower requirements on the hardware buses, and speeds up the analysis process, making the system cheaper.

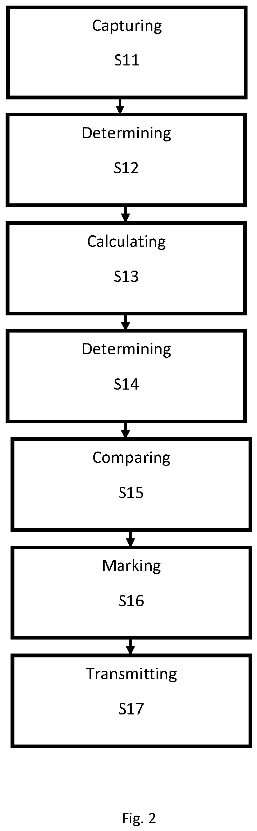

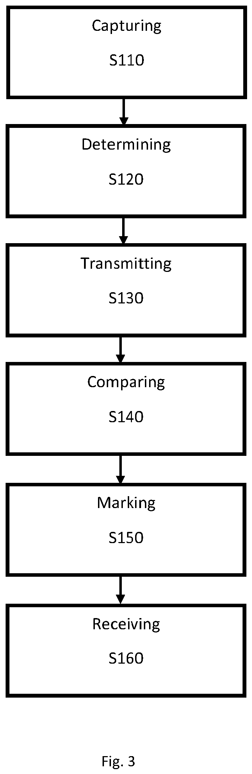

Figure 2 discloses a schematic view of a method for digital microscopy imaging according to another embodiment of the invention. According to this embodiment, images are captured S11 by a camera 2, and a focus value f for each image is determined S12. Then, a focus value curve c (further described herein with reference to figures 4a-c) is calculated S13 for the plurality of images. By analyzing the focus value curve c, the focus value of captured images and/or thresholds can be assessed in relation to various properties of the curve c. For example, the images and/or thresholds can be assessed in relation to a peak focus value p (further described herein with reference to figures 4a-c). Another example is to apply a low pass filter to the curve c, thereby eliminating noise, and assessing the images and/or thresholds in relation to the resulting filtered curve. Other filters may also be used. In the following sections, examples will be described relating to the peak focus value p, it is however, as just described, possible to evaluate the curve c with respect to other aspects. A focal distance z corresponding to the peak focus value p can be determined S14. For images captured at focal distances z less than the focal distance z determined S14 to correspond to the peak value p, the focus value f is compared S15 with a first threshold focus value t1. For images captured at a focal distance z larger than the focal distance z corresponding to the peak focus value p, the focus value f is compared S15 with a second threshold value t2 that is different from the first threshold focus value f1. The term "different" is to be understood as higher or lower. The first threshold focus value t1 is in some cases lower than the second threshold focus value t2. It is to be noted however, that depending on the direction in which the focus is studied in a sample, the thickness of the sample, or the type of sample, it might be preferable that t2 is lower than t1. It is also plausible that the first and second threshold values are equal. In some cases, the sample is similar in content for every x-y-position. It can therefore be advantageous to base the first t1 and second t2 threshold focus values on focus value curves c previously determined for other x-y-positions of the same sample. The step of comparing images S3, S15 can be performed in the camera 2. As can be seen in figure 3, it is however also plausible, that each determined S120 focus value f is transmitted S130 to the separate computing unit 6 from the camera 2. The step of comparing S140 the focus value f of the images to the at least one threshold focus value t and marking S150 them as interesting is then performed in the computing unit 6. An indication is then received S160 at the camera 2 from the computing unit 6 of the marked images. Only the marked images are then transmitted S170 back to the computing unit 6.

For all of the embodiments described herein, it is plausible that the step of capturing images S1, S11, S110 is performed for each focal distance z in the sample before the marking S4, S16, S150 of images as interesting is performed. It is however equally plausible that the focus value f is determined S2, S12, S120 after each image captured S1, S11, S110 at a focal distance z, such that if a focus value f is determined S2, S12, S120 to exceed the first threshold focus value t1, the capturing S1, S11, S110 is interrupted if the determined focus value for a captured image does not exceed the second threshold value t2. The first threshold focus value t1 and/or the second threshold focus value t2, can be calculated as a threshold percentage of the highest determined focus value f for the captured images. The threshold percentage for the first and/or second threshold is for example 50%. It is equally plausible that the percentage is higher such as 55%, 60%, 70%, etc., or lower such as 45%, 40%, 30%, etc.

Figures 4a-c show three different examples of focus curves c for a sample. It is to be noted that the number of thresholds, and their placement, in these figures are for explanatory purposes only, and that any type of sample focus curve could have any number of thresholds placed at curve points not illustrated in the figures.

Figure 4a shows an example of a focus curve c. The focus curve c represented in fig. 4a could for example be a histopathology sample. These types of samples are often thicker with uneven structures, hence the three peaks seen in the figure. By studying the focus curve c, one can determine which image(s) has a high enough focus value f with respect to a set threshold t1, t2. The x-axis defines the focal distance z at which the image is captured. The y-axis represents the focus value f. The peak focus value p is the highest focus value, and has a corresponding focal distance z. The first threshold t1 and second threshold t2 can be seen in figure 4a. In this case, the second threshold t2 is lower than the first threshold t1. For images captured at focal distances z less than the focal distance z determined S14 to correspond to the peak value p, the focus value f can be compared S15 with the first threshold focus value t1. For images captured at a focal distance z larger than the focal distance z corresponding to the peak focus value p, the focus value f can be compared S15 with the second threshold value t2. As can be seen in figure 4a, the first threshold t1 is higher than the second threshold t2, however, it is also plausible that it is the other way around as is further described with reference to figure 4c.

Figure 4b shows another example of a focus curve c. The focus curve c in figure 4b has a Gaussian shape, which commonly occurs in thinner samples, such as blood. Unlike the example in figure 4a, this curve c only has one threshold t. Having multiple thresholds can be advantageous in thicker samples with uneven structures and/or asymmetrical shapes. A second threshold could then be of use to detect irregular behavior such as peaks. In samples where the focus curve c is symmetrical and where different x-y positions have similar properties, a single threshold can be set. If basing the single threshold on previous curves at previous positions in the sample, the estimated threshold can be more statistically accurate, and thus be higher and still ensure that all interesting information (i.e. images with focus values exceeding the threshold) has been added to the z-stack.

Figure 4c shows yet another example of a focus curve c. As can be seen, the first threshold t1 is lower than the second threshold t2. This is especially useful in embodiments where the thresholds are based on previous focus curves in the same sample. Samples usually look the same for different x-y-positions. Thus, by utilizing previous focus curves in the sample, i.e. knowing roughly where the peak value p should be and which focal distance z has the best image information/focus, the selection of images marked as interesting can be interrupted at t2 despite images to the right in fig. 4c having a relatively high focus value f. Knowing where the peak value p is, ensures that no important image information gets lost, despite t2 being higher than t1. The realization that the step of marking images as interesting can be interrupted at a second threshold t2 can be utilized irrespective of what the curve c looks like.

Figure 5 discloses a schematic view of a digital microscopy imaging system 1. The imaging system 1 comprises a camera 2. The camera 2 has a camera sensor 3 which captures images. The camera 2 can capture images of a biological sample at different focal distances z. The camera 2 may capture a plurality of images of a plurality of x-y-positions in the sample. The biological sample could be a peripheral blood sample, cytology sample, histopathology sample, cervical sample, bone marrow, fecal sample, or any type of body fluid sample. The camera 2 further comprises a processing unit 4 which is a programmable logic device.

The processing unit determines a focus value f. The focus value f is a relative measurement, and by obtaining a focus curve c one can determine which image is most focused. The focus value f can be determined for each image captured by the camera 2. In the processing unit 4, the focus value f for each captured image can be compared with a threshold focus value t. Should the focus value f of the image be determined to exceed the threshold focus value t, the image is marked as interesting. The camera 2 further comprises a transmitting unit 5 which in some embodiments transmits the focus value f from the camera 2 to a computing unit 6. The transmitting unit 5 transmits the images marked as interesting to the computing unit 6. In figure 5, the straight line between the camera 2 and the computing unit 6 represents the communication of the focus values f and/or the images marked as interesting, while the dotted line between the computing unit 6 and the camera 2 represents the communication of the indication of which images are interesting. The computing unit 6, is a separate unit from the camera 2, and may comprise a receiving unit 7. The receiving unit 7 receives the focus value f and/or the images marked as interesting from the camera 2. The computing unit 6 further comprises a processing unit 8, in which the received images from the camera 2 can be assembled. The received images might be assembled into a so-called z-stack. A z-stack consists of multiple images captured at different focus distances z. The user of the digital microscopy system can study the z-stack as if it was a traditional microscope by viewing the different focus depths. It is also plausible that the received images are assembled into one composite image, in which the best focused areas of each image captured at each focal distance z is combined to an "all focused" image. The processing unit 8 might be a programmable logic device.

## Claims

1. A method for digital microscopy imaging, the method comprising:
capturing (S1, S11, S110) with a camera (2) comprising a programmable logic device, a plurality of images of a position in a biological sample, wherein each image is captured at a different focal distance (z),
determining (S2, S12, S120) in the programmable logic device in the camera (2), a focus value (f) for each captured image,
for each captured image, comparing (S3, S15, S140) the focus value (f) of the captured image with at least one threshold focus value (t, t1, t2), wherein the at least one threshold focus value (t, t1, t2) is calculated as a threshold percentage of a highest determined focus value for the captured images, wherein the threshold percentage is lower than 100 %;
upon determining (S2, S12, S120) that the focus value (f) of the captured image exceeds the at least one threshold focus value (t, t1, t2), marking (S4, S16, S150) the captured image as an interesting image, and
transmitting (S5, S17, S130) the images marked (S4, S16, S150) as interesting from the camera to a separate computing unit (6).

2. Method according to claim 1, wherein the step of comparing (S3, S15, S140) the focus value (f) of the captured image with at least one threshold focus value (t) comprises comparing the focus value (f) with a first threshold focus value (t1).

3. Method according to claim 1, further comprising the step of:
calculating (S13) a focus value curve (c) for the plurality of images,
determining a focal distance (z) corresponding to a peak focus value (p) of the focus value curve (c),
wherein the step of comparing (S15) the focus value of the captured image with at least one threshold focus value comprises:
for an image captured at a focal distance (z) less than the focal distance corresponding to the peak focus value (p), comparing (S15) the focus value (f) with a first threshold focus value (t1)
for an image captured at a focal distance (z) larger than the focal distance corresponding to the peak focus value (p), comparing the focus value (f) with a second threshold focus value (t2), the second threshold focus value (t2) being different from the first threshold focus value (t1).

4. Method according to any one of claim 1-3, wherein the steps of comparing (S3, S15, S140) the focus value of the captured image with at least one threshold focus value and marking the captured image as an interesting image, is performed in the camera (2).

5. Method according to any one of claim 1-3, further comprising the step of:
transmitting (S5, S17, S130), from the camera (2), each determined focus value (f) to the separate computing unit (6),
wherein the steps of comparing (S3, S15, S140) the focus value of the captured image with at least one threshold focus value (t, t1, t2) and marking (S4, S16, S150) the captured image as an interesting image is performed at the separate computing unit (6),
wherein the method further comprises the step of:
receiving (S160), at the camera (2), an indication from the separate computing unit (6) of the marked images.

6. Method according to any of the preceding claims, wherein the step of capturing (S1, S11, S110) images is performed for each relevant focal distance (z) in the sample, before the marking (S4, S16, S150) of images as interesting images is performed.

7. Method according to any one of claims 3-6, wherein the step of determining (S2, S12, S120) a focus value (f) is performed after every captured image at each focal distance (z), before the next image is captured at the next focal distance (z), such that after a focus value (f) has been determined (S2, S12, S120) to exceed the first threshold value (t1), the step of capturing (S1, S11, S110) images is interrupted if the determined focus value for a captured image does not exceed the first and/or second threshold value (t1, t2).

8. Method according to any preceding claim, wherein the threshold percentage for the first threshold (t1) is 50%.

9. Method according to any of the previous claims, wherein the step of capturing (S1, S11, S110) images is performed for a plurality of x-y-positions in the sample.

10. Method according to claim 3, wherein the first threshold (t1) and/or second threshold (t2) is based on focus value curves (c) previously determined for other x-y-positions of the same sample.

11. Method according to any of the preceding claims, wherein the focus value for each image is calculated by convolution with a filter in the x-direction and/or y-direction.

12. Method according to any of the preceding claims, wherein the sample is a peripheral blood sample, cytology sample or a histopathology sample.

13. A system (1) for digital microscopy imaging, comprising:
a camera (2), comprising:
a camera sensor (3) for capturing a plurality of images of a position in a biological sample, wherein each image is captured at a different focal distance (z),
programmable logic device for determining a focus value (f) for each captured image and for calculating at least one threshold focus value (t, t1, t2) as a threshold percentage of a highest determined focus value for the captured images, wherein the threshold percentage is lower than 100 %, and for each captured image, comparing the focus value (f) of the captured image with the at least one threshold focus value (t, t1, t2), and upon determining that the focus value (f) of the captured image exceeds the at least one threshold focus value (t, t1, t2), marking the captured image as an interesting image,
a transmitting unit (5) for transmitting the focus values (f) and/or the images marked as interesting from the camera (2), and
a separate computing unit (6), comprising:
a receiving unit (7) for receiving the focus values (f) and/or the images marked as interesting from the camera (2), and
a processing unit (8) to assemble the received images.

## Patentansprüche

1. Verfahren für eine digitale mikroskopische Bildgebung, umfassend:
Aufnehmen (S1, S11, S110) mit einer Kamera (2), die eine programmierbare Logikvorrichtung umfasst, einer Vielzahl von Bildern einer Position in einer biologischen Probe, wobei jedes Bild in einem anderen Fokalabstand (z) aufgenommen wird,
Ermitteln (S2, S12, S120) in der programmierbaren Logikvorrichtung in der Kamera (2) eines Fokuswerts (f) für jedes aufgenommene Bild,
für jedes aufgenommene Bild, Vergleichen (S3, S15, S140) des Fokuswerts (f) des aufgenommenen Bildes mit mindestens einem Fokusschwellenwert (t, t1, t2), wobei der mindestens eine Fokusschwellenwert (t, t1, t2) als ein Schwellenwertprozentsatz eines höchsten ermittelten Fokuswerts für die aufgenommenen Bilder berechnet wird, wobei der Schwellenwertprozentsatz niedriger als 100% ist;
nach dem Ermitteln (S2, S12, S120), dass der Fokuswert (f) des aufgenommenen Bildes den mindestens einen Fokusschwellenwert (t, t1, t2) überschreitet, Markieren (S4, S16, S150) des aufgenommenen Bildes als ein interessierendes Bild, und
Übertragen (S5, S17, S130) der als interessierend markierten Bilder (S4, S16, S150) von der Kamera zu einer separaten Computereinheit (6).

2. Verfahren nach Anspruch 1, wobei der Schritt des Vergleichens (S3, S15, S140) des Fokuswerts (f) des aufgenommenen Bildes mit dem mindestens einen Fokusschwellenwert (t) ein Vergleichen des Fokuswerts (f) mit einem ersten Fokusschwellenwert (t1) umfasst.

3. Verfahren nach Anspruch 1, das den Schritt umfasst eines:
Berechnens (S13) einer Fokuswertkurve (c) für die Vielzahl von Bildern; Ermittelns eines Fokusabstands (z), der einem Spitzenfokuswert (p) der Fokuswertkurve (c) entspricht,
wobei der Schritt des Vergleichens (S15) des Fokuswerts des aufgenommenen Bildes mit mindestens einem Fokusschwellenwert umfasst:
für ein Bild, das mit einem Fokalabstand (z) von weniger als dem Fokalabstand aufgenommen wurde, der dem Spitzenfokuswert (p) entspricht, Vergleichen (S15) des Fokuswerts (f) mit einem ersten Fokusschwellenwert (t1);
für ein Bild, das mit einem Fokalabstand (z) von mehr als dem Fokalabstand aufgenommen wurde, der dem Spitzenfokuswert (p) entspricht, Vergleichen des Fokuswerts (f) mit einem zweiten Fokusschwellenwert (t2), wobei sich der zweite Fokusschwellenwert (t2) von dem ersten Fokusschwellenwert (t1) unterscheidet.

4. Verfahren nach einem der Ansprüche 1 bis 3, wobei die Schritte des Vergleichens (S3, S15, S140) des Fokuswerts des aufgenommenen Bildes mit mindestens einem Fokusschwellenwert und des Markierens des aufgenommenen Bildes als ein interessierendes Bild in der Kamera (2) durchgeführt werden.

5. Verfahren nach einem der Ansprüche 1 bis 3, das ferner den Schritt umfasst eines:
Übertragens (S5, S17, S130) jedes ermittelten Fokuswerts (f) von der Kamera (2) zu der separaten Computereinheit (6),
wobei die Schritte des Vergleichens (S3, S15, S140) des Fokuswerts des aufgenommenen Bildes mit mindestens einem Fokusschwellenwert (t, t1, t2) und des Markierens (S4, S16, S150) des aufgenommenen Bildes als ein interessierendes Bild in der separaten Computereinheit (6) durchgeführt werden,
wobei das Verfahren ferner den Schritt umfasst eines: Empfangens (S160), in der Kamera (2), einer Anzeige der markierten Bilder von der separaten Computereinheit (6).

6. Verfahren nach einem der vorhergehenden Ansprüche, wobei der Schritt des Aufnehmens (S1, S11, S110) für jeden relevanten Fokalabstand (z) in der Probe durchgeführt wird, bevor das Markieren (S4, S16, S150) von Bildern als interessierende Bilder durchgeführt wird.

7. Verfahren nach einem der Ansprüche 3 bis 6, wobei der Schritt des Ermittelns (S2, S12, S120) eines Fokuswerts (f) nach jedem aufgenommenen Bild bei jedem Fokalabstand (z) durchgeführt wird, bevor das nächste Bild bei dem nächsten Fokalabstand (z) aufgenommen wird, sodass nachdem ein Fokuswert (f) ermittelt wurde (S2, S12, S120), der den ersten Schwellenwert (t1) überschreitet, der Schritt des Aufnehmens (S1, S11, S110) unterbrochen wird, wenn der ermittelte Fokuswert für ein aufgenommenes Bild den ersten und/oder den zweiten Schwellenwert (t1, t2) nicht überschreitet.

8. Verfahren nach einem der vorhergehenden Ansprüche, wobei der Schwellenwertprozentsatz für den ersten Schwellenwert (t1) 50% beträgt.

9. Verfahren nach einem der vorhergehenden Ansprüche, wobei der Schritt des Aufnehmens (S1, S11, S110) von Bildern für eine Vielzahl von x-y-Positionen in der Probe durchgeführt wird.

10. Verfahren nach Anspruch 3, wobei der erste Schwellenwert (t1) und/oder der zweite Schwellenwert (t2) auf den Fokuswertkurven (c) beruhen, die zuvor für andere x-y-Positionen der gleichen Probe ermittelt wurden.

11. Verfahren nach einem der vorhergehenden Ansprüche, wobei der Fokuswert für jedes Bild durch eine Faltung mit einem Filter in der x-Richtung und/oder der y-Richtung berechnet wird.

12. Verfahren nach einem der vorhergehenden Ansprüche, wobei die Probe eine periphere Blutprobe, eine Zytologieprobe oder eine Histopathologieprobe ist.

13. System (1) für eine digitale mikroskopische Bildgebung, umfassend:
eine Kamera (2), umfassend:
einen Kamerasensor (3) zum Aufnehmen einer Vielzahl von Bildern einer Position in einer biologischen Probe, wobei jedes Bild in einem anderen Fokalabstand (z) aufgenommen wird,
eine programmierbare Logikvorrichtung zum Ermitteln eines Fokuswerts (f)
für jedes aufgenommene Bild und zum Berechnen mindestens eines Fokusschwellenwerts (t, t1, t2) als einen Schwellenwertprozentsatz eines höchsten ermittelten Fokuswerts für die aufgenommenen Bilder, wobei der Schwellenwertprozentsatz niedriger als 100% ist, und für jedes aufgenommene Bild, Vergleichen des Fokuswerts (f) des aufgenommenen Bildes mit dem mindestens einen Fokusschwellenwert (t, t1, t2), und nach dem Ermitteln, dass der Fokuswert (f) des aufgenommenen Bildes den mindestens einen Fokusschwellenwert (t, t1, t2) überschreitet, Markieren des aufgenommenen Bildes als ein interessierendes Bild,
eine Übertragungseinheit (5) zum Übertragen des Fokuswerts (f) und/oder der Bilder, die von der Kamera (2) als interessierend markiert wurden, und
eine separate Computereinheit (6), umfassend:
eine Empfangseinheit (7) zum Empfangen des Fokuswerts (f) und/oder der Bilder, die von der Kamera (2) als interessierend markiert wurden, und
eine Verarbeitungseinheit (8) zum Zusammensetzen der empfangenen Bilder.

## Revendications

1. Procédé d'imagerie numérique par microscopie, le procédé comprenant les étapes suivantes :
capturer (S1, S11, S110) avec une caméra (2) comprenant un dispositif logique programmable, une pluralité d'images d'une certaine position dans un échantillon biologique, chaque image étant capturée à une distance focale (z) différente,
déterminer (S2, S12, S120) dans le dispositif logique programmable de la caméra (2), une valeur de focalisation (f) pour chaque image capturée,
pour chaque image capturée, comparer (S3, S15, S140) la valeur de focalisation (f) de l'image capturée avec au moins une valeur de focalisation seuil (t, t1, t2), au moins une valeur de focalisation seuil (t, t1, t2) étant calculée comme un pourcentage seuil de la valeur de focalisation déterminée la plus élevée pour les images capturées, où le pourcentage seuil est inférieur à 100 % ;
déterminer (S2, S12, S120) que la valeur de focalisation (f) de l'image capturée dépasse l'au moins une valeur de focalisation seuil (t, t1, t2), marquer (S4, S16, S150) l'image capturée comme étant une image intéressante, et transmettre (S5, S17, S130), par la caméra à une unité de calcul distincte (6), les images marquées (S4, S16, S150) comme intéressantes.

2. Procédé selon la revendication 1, dans lequel l'étape de comparaison (S3, S15, S140) de la valeur de focalisation (f) de l'image capturée avec au moins une valeur de focalisation seuil (t) comprend de comparer la valeur de focalisation (f) à une première valeur de focalisation seuil (t1).

3. Procédé selon la revendication 1, comprenant en outre l'étape suivante :
calculer (S13) une courbe de valeur de focalisation (c) pour la pluralité d'images, déterminer une distance focale (z) correspondant à la valeur de focalisation maximale (p) de la courbe de valeur de focalisation (c), dans lequel l'étape de comparaison (S15) de la valeur de focalisation de l'image capturée à au moins une valeur de focalisation seuil comprend les étapes suivantes :
pour une image capturée à une distance focale (z) inférieure à la distance focale correspondant à la valeur de focalisation maximale (p), comparer (S15) la valeur de focalisation (f) à une première valeur de focalisation seuil (t1)
pour une image capturée à une distance focale (z) supérieure à la distance focale correspondant à la valeur de focalisation maximale (p), comparer la valeur de focalisation (f) à une deuxième valeur de focalisation seuil (t2), la deuxième valeur de focalisation seuil (t2) étant différente de la première valeur de focalisation seuil (t1).

4. Procédé selon l'une quelconque des revendications 1 à 3, dans lequel les étapes de comparaison (S3, S15, S140) de la valeur de focalisation de l'image capturée à au moins une valeur de focalisation seuil et de marquage de l'image capturée comme image intéressante, sont réalisées dans la caméra (2).

5. Procédé selon l'une quelconque des revendications 1 à 3, comprenant en outre l'étape suivante :
transmettre (S5, S17, S130), à partir de la caméra (2), chaque valeur de focalisation déterminée (f) à l'unité de calcul séparée (6),
dans lequel les étapes de comparaison (S3, S15, S140) de la valeur de focalisation de l'image capturée à au moins une valeur de focalisation seuil (t, t1, t2) et de marquage (S4, S16, S150) de l'image capturée en tant qu'image intéressante sont réalisées par l'unité de calcul séparée (6),
dans lequel le procédé comprend en outre l'étape suivante :
recevoir (S160), au niveau de la caméra (2), une indication de l'unité de calcul séparée (6) des images marquées.

6. Procédé selon l'une quelconque des revendications précédentes, dans lequel l'étape de capture (S1 , S11 , S110) d'images est réalisée pour chaque distance focale pertinente (z) dans l'échantillon, avant que le marquage (S4, S16, S150) des images en tant qu'images intéressantes ne soit réalisé.

7. Procédé selon l'une quelconque des revendications 3 à 6, dans lequel l'étape de détermination (S2, S12, S120) d'une valeur de focalisation (f) est réalisée après chaque image capturée à chaque distance focale (z), avant que l'image suivante ne soit capturée à la distance focale (z) suivante, de sorte que, après qu'il a été déterminé (S2, S12, S120) qu'une valeur de focalisation (f) dépasse la première valeur seuil (t1), l'étape de capture (S1, S11, S110) des images est interrompue si la valeur de focalisation déterminée pour une image capturée ne dépasse pas les première et/ou deuxième valeurs seuil (t1, t2).

8. Procédé selon l'une quelconque des revendications précédentes, dans lequel le pourcentage seuil pour le premier seuil (t1) est de 50 %.

9. Procédé selon l'une quelconque des revendications précédentes, dans lequel l'étape de capture (S1, S11, S110) d'images est réalisée pour une pluralité de positions x-y dans l'échantillon.

10. Procédé selon la revendication 3, dans lequel le premier seuil (t1) et/ou le deuxième seuil (t2) sont basés sur des courbes de valeurs de focalisation (c) préalablement déterminées pour d'autres positions x-y du même échantillon.

11. Procédé selon l'une quelconque des revendications précédentes, dans lequel la valeur de focalisation pour chaque image est calculée par convolution avec un filtre dans la direction x et/ou dans la direction y.

12. Procédé selon l'une quelconque des revendications précédentes, dans lequel l'échantillon est un échantillon de sang périphérique, un échantillon de cytologie ou un échantillon d'histopathologie.

13. Système (1) destiné à l'imagerie numérique par microscopie, comprenant :
une caméra (2), comprenant :
un capteur de caméra (3) pour capturer une pluralité d'images d'une position dans un échantillon biologique, chaque image étant capturée à une distance focale différente (z),
un dispositif logique programmable pour déterminer une valeur de focalisation (f),
pour chaque image capturée et pour calculer au moins une valeur seuil de focalisation (t, t1, t2) en tant que pourcentage seuil de la valeur de focalisation déterminée la plus élevée pour les images capturées, le pourcentage seuil étant inférieur à 100 %, et pour chaque image capturée, comparer la valeur de focalisation (f) de l'image capturée à au moins une valeur seuil de focalisation (t, t1, t2) et, lors de la détermination que la valeur de focalisation (f) de l'image capturée dépasse au moins une valeur seuil de focalisation (t, t1, t2), marquer l'image capturée en tant qu'image intéressante, une unité de transmission (5) pour transmettre les valeurs de focalisation (f) et/ou les images marquées comme intéressantes, depuis la caméra (2), et
une unité de calcul séparée (6), comprenant :
une unité de réception (7) pour recevoir les valeurs de focalisation (f) et/ou les images marquées comme intéressantes depuis la caméra (2), et
une unité de traitement (8) pour assembler les images reçues.
